(19) Europäisches Patentamt
European Patent Office
Office européen des brevets

(11) EP 1 923 792 A1

(12) **EUROPEAN PATENT APPLICATION**

(43) Date of publication:
21.05.2008 Bulletin 2008/21

(51) Int Cl.:
*G06F 12/02* (2006.01)

(21) Application number: 07120519.9

(22) Date of filing: 12.11.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK RS

(30) Priority: 20.11.2006 KR 20060114788

(71) Applicant: Samsung Electronics Co., Ltd
Suwon-si, Gyeonggi-do 442-742 (KR)

(72) Inventors:
• Woo, Nam-Yoon
Gyeonggi-do (KR)
• Kim, Jin-Kyu
Seoul (KR)
• Yoon, Song-Ho
Gyeonggi-do (KR)

(74) Representative: Robinson, Ian Michael
Appleyard Lees
15 Clare Road
Halifax, West Yorkshire HX1 2HY (GB)

(54) **Apparatus and method of managing nonvolatile memory**

(57) Apparatus and method of managing a nonvolatile memory (300) are disclosed where the nonvolatile-memory-managing apparatus includes a nonvolatile memory (300) that has a first block and a second block having one or more physical pages, and an operation unit (400) that determines the type of merge operation to perform for the first block and second block according to whether logical page offsets recorded in consecutive physical pages of the first block increases in steps and in repeating order.

## FIG. 2

**Description**

BACKGROUND OF THE INVENTION

1. Field of the Invention

Aspects of the present invention relate to a nonvolatile memory, and more particularly to an apparatus and method of managing a nonvolatile memory to improve performance of the nonvolatile memory, and to determine an offset of a physical page in which a requested logical page is recorded without referring to mapping information of the logical page and the physical page.

2. Description of the Related Art

Nonvolatile memory is now widely used as a storage medium of portable electric devices such as digital cameras, personal digital assistants (PDAs), and MP3 players due to the fact that the nonvolatile memory has advantages of both a random access memory (RAM) in which data is freely writable and erasable, and a read only memory (ROM) in which stored data is preserved even when no power is supplied.

The nonvolatile memory can arbitrarily access data stored in a specified position thereof from the point of view of hardware in the same manner as existing memory devices such as RAM, nonvolatile storage device, and magnetic memory. However, when correcting or erasing the stored data, the nonvolatile memory accesses the data in units of an erase block (hereinafter, referred to as "block"), unlike the existing memory devices. In other words, when a previously written data is to be corrected or erased, a block that includes the previously written data must be erased before the data is again written (hereinafter referred to as "erasing before writing"). To analogize, the operation is akin to erasing an entire word using an "erase" key and then rewriting the word in order to correct a letter in the word.

Hereinafter, bytes having physically successive addresses are referred to as a sector. The sector refers to a basic unit to perform a data read/write operation in the nonvolatile memory and a block composed of a plurality of sectors refers to a basic unit to perform a data erase operation during an erase operation.

The nonvolatile memory supports a logical-physical mapping method that accesses data written in the nonvolatile memory through one logical address even if a physical address is changed due to the erasing before writing operation referenced above. In other words, the mapping method manages mapping data between the logical address and the physical address regarding a predetermined data through a predetermined mapping table. The mapping method includes a sector-mapping method and a block-mapping method.

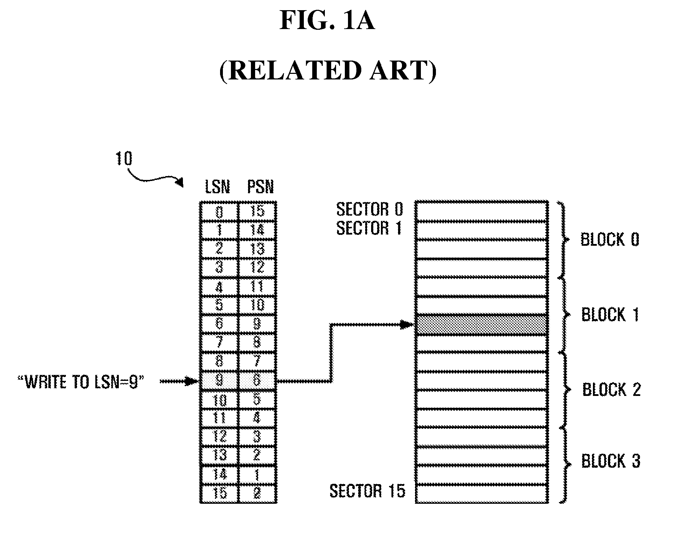

FIG. 1 A depicts a nonvolatile memory access method according to the sector-mapping method. As shown in FIG. 1 A, the sector-mapping method maintains mapping data in the form of a mapping table 10 in a sector unit of the nonvolatile memory to access a physical sector of the nonvolatile memory using logical sector data. For example, if a logical sector number (LSN) is designated as 9 along with a request for a write operation of predetermined data, an access device of the nonvolatile memory retrieves a physical sector number (PSN) 6 that corresponds to the LSN 9 with reference to the mapping table 10. Then, the predetermined data is written in the sector number 6 of the nonvolatile memory. However, if another data is already written in the sector number 6, the predetermined data is written in an empty physical sector of the nonvolatile memory and the PSN corresponding to LSN 9 is changed in the mapping table 10.

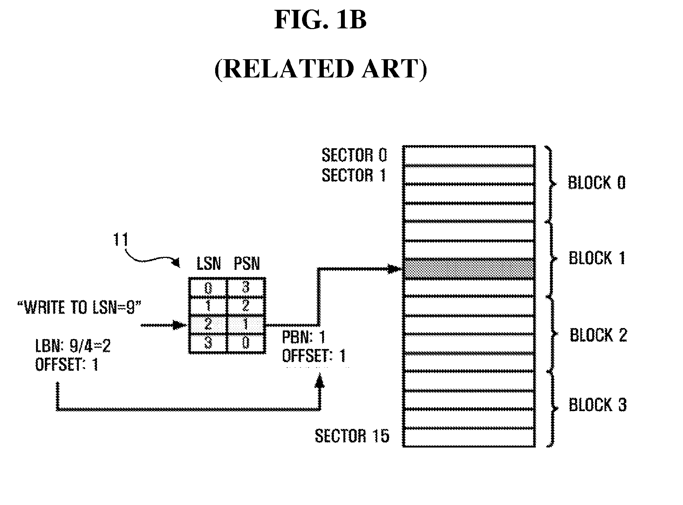

FIG. 1 B depicts a nonvolatile memory access method according to the block-mapping method. As shown in FIG. 1 B, the block-mapping method maintains mapping data in the form of a mapping table 11 in a block unit of the nonvolatile memory and converts logical sector data into logical block data to access a physical sector of the nonvolatile memory using the logical block data and offset data. For example, if four sectors constitute one block, and if an LSN 9 is designated along with a request for a write operation of predetermined data, the access device of the nonvolatile memory obtains a logical block number (LBN) by performing an operation 9/4=2 of LSN 9, and then obtains a physical block number (PBN) corresponding to the LBN by referring to the mapping table 11. As shown, an offset of 1 of the logical block (of LBN of 2) coincides with an offset of 1 of the physical block (PBN of 1) so that data is written in a sector corresponding to the offset of 1 in the obtained PBN of 1. If another data is written in the sector, the predetermined data is written or recorded in an empty physical sector of the nonvolatile memory by matching the offset of the logical block to the offset of the physical block. Thereafter, a PSN corresponding to the LBN of 2 in the mapping table 11 is changed.

The sector-mapping method has a problem in its difficulty in application to the nonvolatile memory because of excessive mapping data that is maintained in a sector unit. In this respect, recent technology is based on the block-mapping method that requires use of less mapping data.

Korean Unexamined Patent No. 2002-0092487 discloses "A Method of Managing Nonvolatile Memory" that matches a logical page offset and a physical page offset by providing mapping information for only a portion of the blocks and performing a merge operation of the remaining blocks, which can indicate an offset of a physical page, in which a logical page is recorded, without mapping information. In Korean Unexamined Patent No. 2002-0092487, a full merge operation is more frequently requested than a copy-merge operation. To perform the full merge operation, an erase operation of one block and a write operation of several pages are required. However, the frequent erase/write operations deteriorate the performance of the nonvolatile memory.

Accordingly, a nonvolatile-memory-managing apparatus and method, to improve the performance of a nonvolatile memory system by reducing the number of full merge operations is required.

SUMMARY OF THE INVENTION

An object of the present invention to provide an apparatus and method of managing a nonvolatile memory, which can improve performance of a nonvolatile memory system by reducing the number of full merge operations, and/or other advantages.

According to the present invention there is provided a nonvolatile memory and a method of managing a nonvolatile memory,as set forth in the appended claims. Other features of the invention will be apparent from the dependent claims, and the description which follows.

According to an aspect of the present invention, a nonvolatile memory managing apparatus includes a nonvolatile memory that has a first block and a second block having one or more physical pages, and an operation unit that a merge operation to perform for the first block and second block according whether logical page offsets recorded in consecutive physical pages in the first block increase in steps and in repeating order.

According to another aspect of the present invention, a nonvolatile-memory-managing apparatus includes a nonvolatile memory that has at least one block wherein one or more logical page offsets recorded in consecutive physical pages of the block increase in steps and in repeating order, an input unit (100) that receives a request to perform a read operation with a first logical page offset, and an operation unit that obtains an offset of a second physical page wherein the first logical page offset is recorded, based on a second logical page offset obtained using a first physical page after accessing the first physical page having the same offset as a first logical page offset.

According to still another aspect of the present invention, provided is a nonvolatile-memory-managing method of a nonvolatile memory that has a first block and second block having one or more physical pages, where the method includes determining whether logical page offsets recorded in consecutive physical pages of the first block increases in steps and in repeating order, and deciding a merge operation to perform for the first block and second block according to a result of the determination.

According to another aspect of the present invention, provided is a nonvolatile memory managing method of a nonvolatile memory that has at least one block wherein one or more logical page offsets recorded in consecutive physical pages of the first block increase in steps and in repeating order, where the method includes receiving a request to perform a read operation with a first logical page offset, accessing a first physical page having the same offset as the first logical page offset and obtaining an offset of a second physical page wherein the first logical page offset is recorded, based on an offset of the second logical page offset obtained from the first physical page.

In yet another aspect of the present invention there is provided a method of managing a non-volatile memory having a plurality of logic pages and a plurality of physical pages of a block where the method includes determining whether to perform a switch merge, a copy merge, or a full merge based on at least one of whether offsets of the plurality of the logic pages are sequentially looped and whether a number of valid logical pages of the block is the same as a total number of the physical pages included in the block, and performing an erase operation on the one or more blocks on which of the switch merge, the copy merge, or the full merge was performed.

In still another aspect of the present invention there is provided an apparatus to manage a non-volatile memory having a plurality of logic pages and a plurality of physical pages of a block, where the apparatus includes a controller to determine whether to perform a switch merge, a copy merge, or a full merge based on at least one of whether offsets of the plurality of the logic pages are sequentially looped and whether a number of valid logical pages of the block is the same as a total number of the physical pages included in the block, and to perform an erase operation on the one or more blocks on which of the switch merge, the copy merge, or the full merge was performed.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the aspects, taken in conjunction with the accompanying drawings of which:

FIG. 1 A depicts a sector-mapping method according to a related art;

FIG. 1 B depicts a block-mapping method according to a related art;

FIG. 2 depicts an apparatus to manage a nonvolatile memory according to an aspect of the present invention;

FIG. 3 depicts a structure of the nonvolatile memory shown in FIG. 2;

FIG. 4 depicts a relationship of a data block and a log block of the nonvolatile memory shown in FIG. 2;

FIG. 5 depicts an area division of the nonvolatile memory shown in FIG. 2;

FIG. 6 depicts a switch merge operation according to an aspect of the present invention;

FIG. 7 depicts a copy merge operation according to an aspect of the present invention;

FIG. 8 depicts a full merge operation according to an aspect of the present invention;

FIG. 9 is a flowchart showing a write operation according to an aspect of the present invention;

FIG. 10 is a flowchart showing a merge operation according to an aspect of the present invention;

FIG. 11 is a flowchart showing a read operation according to an aspect of the present invention; and

FIG. 12 depicts a block wherein the merge operation is performed according to an aspect of the present invention.

DETAILED DESCRIPTION OF THE EMBODIMENTS

Reference will now be made in detail to aspects of the present invention, examples of which are illustrated in the accompanying drawings, wherein like reference numerals refer to the like elements throughout. The aspects are described below in order to explain the present invention by referring to the figures.

Aspects of the present invention are described hereinafter with reference to flowchart illustrations of user interfaces, methods, and computer program products. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create an apparatus and/or method of implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction apparatus and/or method that implement the function specified in the flowchart block or blocks.

The computer program instructions may also be loaded into a computer or other programmable data processing apparatus to cause a series of operations to be performed in the computer or other programmable apparatus to produce a computer implemented process such that the instructions that execute in the computer or other programmable apparatus provide operations to implement the functions specified in the flowchart block or blocks.

And each block of the flowchart illustrations may represent a module, segment, or portion of code, which includes one or more executable instructions to implement the specified logical function(s). It should also be noted that in some alternative implementations, the functions noted in the blocks may occur out of order. For example, two blocks shown in succession may in fact be executed substantially concurrently or the blocks may sometimes be executed in reverse order, depending upon the functionality involved.

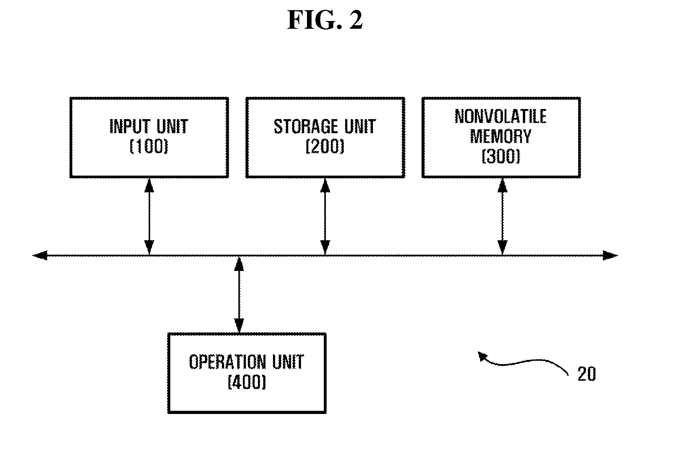

FIG. 2 depicts an apparatus to manage a nonvolatile memory 300 according to an aspect of the present invention. As shown in FIG. 2, the apparatus 20 to manage the nonvolatile memory 300 includes an input unit 100, a storage unit 200, an operation unit (or a controller) 400, and/or the nonvolatile memory 300.

The input unit 100 receives a request to read/write to a predetermined logical page from a user. The operation unit 400 converts the write/read request of a logical address into a write/read request for a physical address. That is, the operation unit 400 converts the logical page requested by the user into a physical address of the nonvolatile memory 300, and performs a write/read operation.

The storage unit 200 stores an access code needed when the operation unit 400 is to access the nonvolatile memory 300. For example, the storage unit 200 stores a mapping table (not shown) that shows a mapping relation between the logical address requested by the user and the physical address of the nonvolatile memory 300. The storage unit 200 may be an exterior memory, including a random access memory (RAM) or a nonvolatile memory.

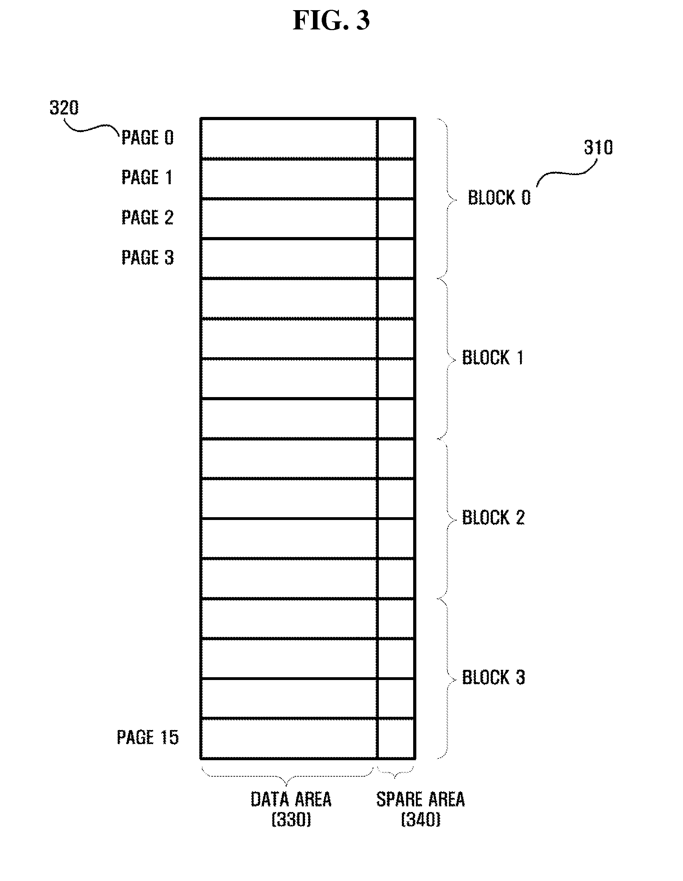

The nonvolatile memory 300 stores data to be recorded according to a user request. The structure of the nonvolatile memory 300 will be described with reference to FIG. 3. FIG. 3 depicts the structure of the nonvolatile memory 300 shown in FIG. 2. As shown in FIG. 3, the nonvolatile memory 300 includes a plurality of blocks 310 having a plurality of pages 320.

A page, as a basic unit of a read/write operation, can include a data area 330 and a spare area 340, as shown in FIG. 3. In this aspect, data is stored in the data area 330, and an offset of the logical page recorded in the corresponding physical page is stored in the spare area 340. The division shown in FIG. 3 depicts a physical division of the nonvolatile memory 300.

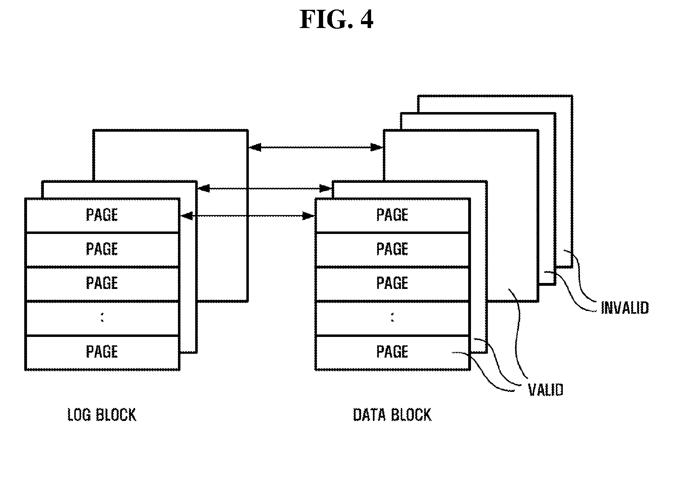

A block, as a basic unit of an erase operation, can be distinguished as a data block, log block, and free block. In this aspect, the free block refers to a block wherein data is not recorded, i.e., an empty block. The data block refers to a block that stores normal data. The log block refers to a block that is allocated when a special part of data recorded in the data block is to be modified, in order to record the modified part. Accordingly, the log block corresponds to only a single data block, as shown in FIG. 4, and stores the modified pages of the corresponding data block. Therefore, pages of the log block can be preferentially (or initially) referenced rather than pages of the data block.

Hereinafter, the page that is preferentially referenced to in the log block will be referred to as a "valid page" and a page that is ignored even if physically valid data is recorded in the page will be referred to as an "invalid page".

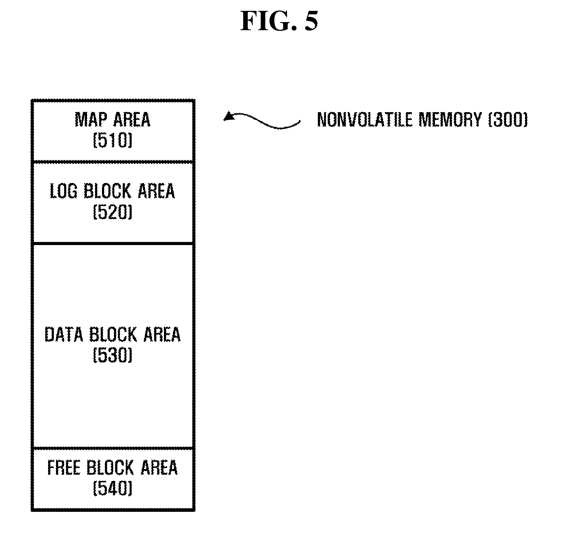

As shown in FIG. 5, the nonvolatile memory 300 can include a map area 510, a data block area 530, a log block area 520, and/or a free block area 540. The map area 510 stores address-converting information. The data block area 530 has a plurality of data blocks (not shown), and the log block area 520 has a plurality of log blocks (not shown). The free block area 540 has a plurality of free blocks (not shown) to be allocated to a data block or a log block. Each area shown in FIG. 5 depicts a logical division of the nonvolatile memory 300. The data block, log block, and free block included in each respective area may physically exist in sequence, or they may be scattered.

According to an aspect of the present invention, a "block merge" can be performed in order to manage the nonvolatile memory 300. The block merge collects valid pages of the data blocks and/or log blocks, generates new data blocks, and performs an erase operation of an existing log block and/or data block in order to generate free blocks. The block merge can be performed when a free page for use as the log block no longer exists or is available. The block merge is distinguishable as a switch merge, a copy merge, and a full merge. When the block merge is performed, one of the three merges can be performed according to the status of the block to be merged.

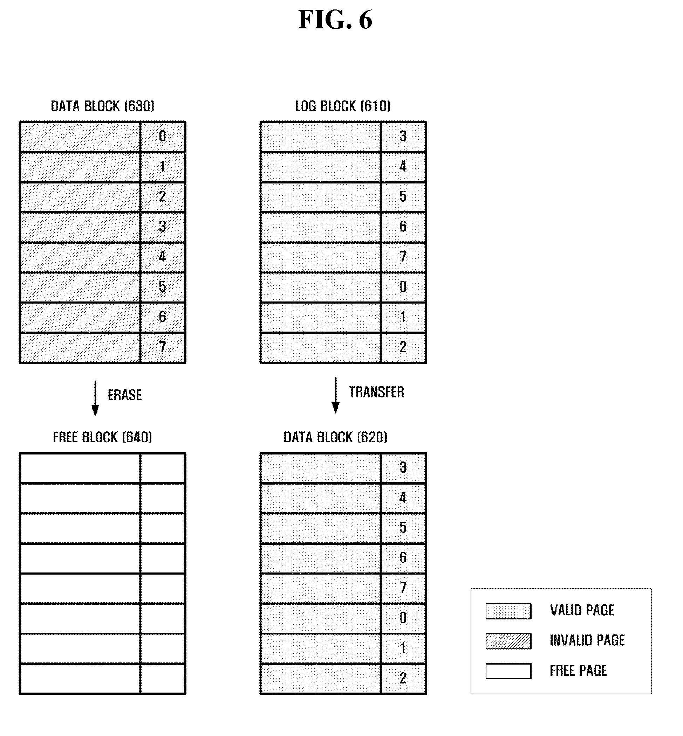

As shown in FIG. 6, the switch merge is performed if offsets of logical pages recorded in consecutive physical pages of a log block 610 increases in steps (or sequentially) and in repeating order, and if the number of valid logical pages in the log block 610 is the same as the total number of the physical pages included in the log block 610. The switch merge transfers the log block 610 to a new data block 620, updates address-converting information, and erases data recorded in an existing data block 630. That is, the switch merge is performed by updating the address-converting information without copying the data recorded in the existing data block 630 or the log block 610. Once the update occurs, the existing data block 630 becomes an erasable block.

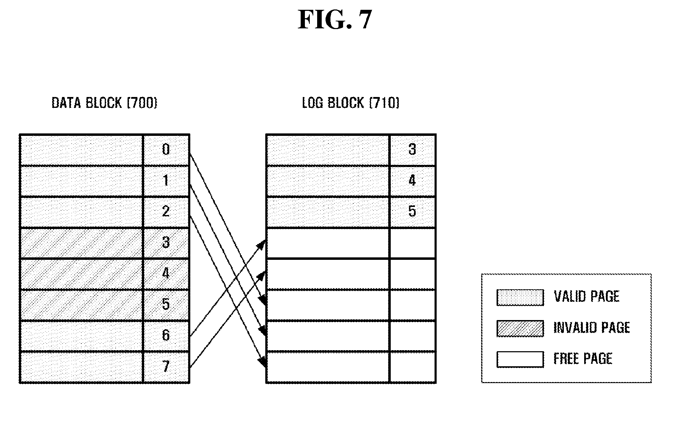

As shown in FIG. 7, the copy merge is performed if offsets of logical pages recorded in consecutive physical pages of a log block 710 increases in steps (or sequentially) and in repeating order, and if the number of valid logical pages in the log 710 block is different from the total number of the physical pages included in the log block 710. The copy merge copies the valid logical pages of an existing data block 700 into free pages in the log block 710, and transfers the log block 710 to a new data block (not shown). Once the transfer occurs, the existing data block 700 becomes an erasable block (not shown).

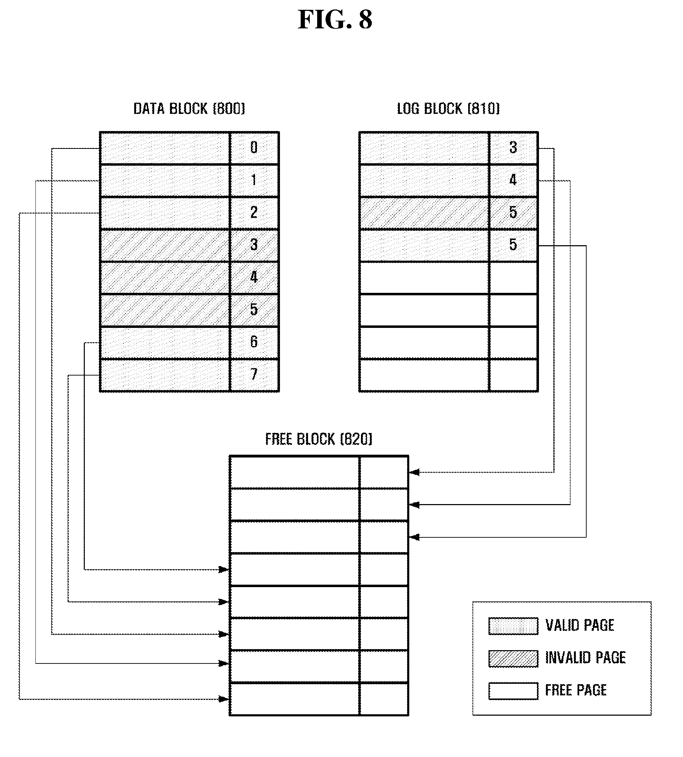

As shown in FIG. 8, the full merge is performed if offsets of logical pages recorded in consecutive physical pages of a log block 810 does not increase in steps (or sequentially) or in repeating order. The full merge receives an allocated free block 820, and copies valid logical pages of the log block 810 and an existing data block 800 into the allocated free block 820. Once the copying occurs, the existing data block 800 and log block 810 become erasable blocks.

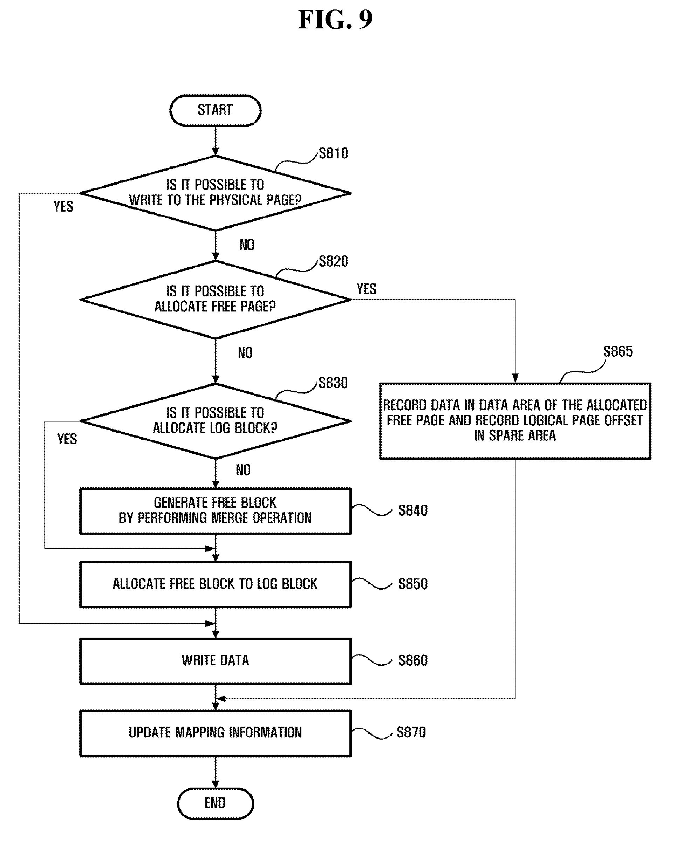

A method of managing the nonvolatile memory will be described with reference to FIGS. 9 to 12. FIG. 9 is a flowchart showing a write operation according to an aspect of the present invention.

If a user requests a write operation using an offset of a first logical page, the operation unit 400 searches for a physical page offset corresponding to the first logical page offset with reference to mapping information. Then, it is determined whether a found physical page is available for writing in operation S810.

After operation S81 0, if the corresponding physical page is available ("YES" in operation S81 0), the operation unit 400 records data in the physical page in operation S860. In operation S860, data can be recorded in the data area of the corresponding physical page. When the data is recorded in the data area, the first logical page offset is recorded in the spare area of the physical page. When the data has been written, the operation unit 400 updates the mapping information of the map area.

After operation S81 0, if the corresponding physical page is not available ("NO" in operation S81 0), i.e., data has been already recorded in the physical page, the operation unit 400 determines whether the free page is allocatable in operation S820.

After operation S820, if the free is allocatable ("YES" in operation S820), the operation unit 400 allocates the free page, and records data in the data area of the allocated free page in operation S865. In operation S865, the operation unit 400 records the first logical page offset in the spare area of the free page.

After operation S820, if the corresponding physical page is not allocatable ("NO" in operation S820), the operation unit 400 determines whether the log block is allocatable in operation S830, i.e., the operation unit 400 determines whether the number of remaining free blocks is sufficient.

If the number of the remaining free blocks is sufficient to allocate a new log block ("YES" in operation S830), the operation unit 400 allocates one or more predetermined free blocks to the log block in operation S850, and records data in the physical page of the allocated log block in operation S860. In operation S860, the operation unit 400 records data in the data area of the physical page, and records the first logical page offset in the spare area of the physical page. When the data has been written, the operation unit 400 updates the mapping information of the map area in operation S870.

However, if the number of the remaining free blocks is not enough to allocate a new log block ("NO" in operation S830), the operation unit 400 generates a new free block by performing a merge operation in operation S840, allocates the free block to the log block in operation S850, and performs a write operation in the physical page of the allocated new log block. Then, the operation unit 400 updates the mapping information of the map area in operation S870.

In the above description with reference to FIG. 9, if a user requests a write operation, a method of performing the merge operation to generate the free block was described by way of an example. However, the merge operation can be automatically performed if the block status of the nonvolatile memory satisfies a predetermined standard. For example, the merge operation can be performed not only if a user requests a write operation, but also, or alternatively, if the number of free blocks is less than a predetermined number.

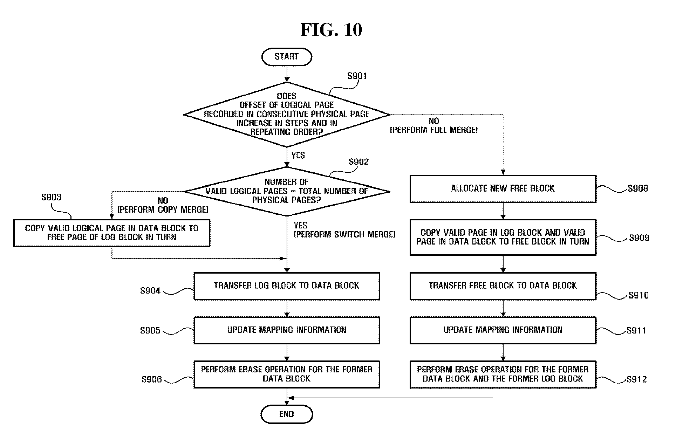

FIG. 10 is a flowchart showing a merge operation according to an aspect of the present invention. The operation unit 400 checks a sorting status of a logical page in a to-be-merged log block. Specifically, in the log block, the operation unit 400 checks a spare area of consecutive physical pages in operation S901 in order to determine whether a logical page offset recorded in a spare area increases in steps (or sequentially) and in repeating order in operation S901. In this aspect, the offset increases in steps and in repeating order, which refers to the fact that the logical page offset increases in steps, and the logical page having the maximum offset and the logical page having the minimum offset exist in sequence.

As shown in FIG. 10 with reference to FIG. 8, if the offset of the logical page recorded in the consecutive physical pages in the log block does not increase in steps or in repeating order ("NO" in operation S901), the operation unit 400 performs the full merge of the corresponding log block. To perform the full merge, the operation unit 400 receives (or obtains) a new free block in operation S908, and copies the valid logical page in the log block and data block into the new free block in operation S909. In operation S909, the operation unit 400 successively copies the valid logical pages to the new free block according to the offset so that the logical page offset can increase in steps and in repeating order when all valid logical pages have been copied to the new free block. When all valid logical pages in the log and data blocks have been copied to the new free block, the operation unit 400 transfers the new free block to a new data block in operation S91 0, and updates mapping information in operation S911. Then, the operation unit 400 performs the erase operation to the former data block and log block in order to generate new free blocks in operation S912.

On the other hand, if offset of the logical page recorded in the consecutive physical pages in the log block increases in steps or in repeating order ("YES" in operation S901), the operation unit 400 determines whether the number of valid logical pages in the corresponding log block is the same as the total number of physical pages included in the log block in operation S902.

As shown in FIG. 10 with reference to FIG. 7, if the number of the valid logical pages in the log block is different from the total number of physical pages included in the log block ("NO" in operation S902), the operation unit 400 performs the copy merge. To perform the copy merge, the operation unit 400 records the valid logical page in the data block corresponding to the log block into the free page of the log block in operation S903. In operation S903, the operation unit 400 successively copies the valid logical pages to the log block according to the offset so that the logical page offset can increase in steps and in repeating order when the operation unit 400 checks the status of the log block after the copy process. When the copy process is completed, the operation unit 400 transfers the log block to a new data block in operation S904, and updates the mapping information in operation S905. Then, the operation unit 400 performs the erase operation to the former data block in order to generate a new free block in operation S906.

As shown in FIG. 10 with reference to FIG. 6, if the number of the valid logical pages in the log block is the same as the total number of physical pages included in the log block ("YES" in operation S902), the operation unit 400 performs the switch merge. Specifically, the operation unit 400 transfers the log block to the data block in operation S904, and updates the mapping information in operation S905. Then, the operation unit 400 performs the erase operation to the former data block in order to generate a new free block in operation S906.

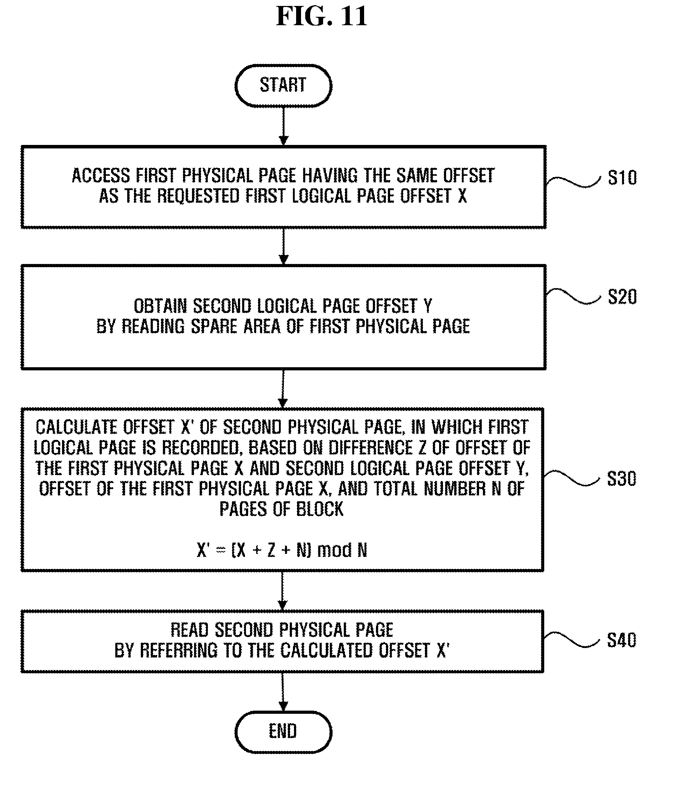

FIG. 11 is a flowchart showing a read operation according to an aspect of the present invention. When a user requests a read operation using the first logical page offset, the operation unit 400 accesses a first physical page having the same offset as that of the first logical page (hereinafter, referred to as "first offset" or X) in operation S10. Then, the operation unit 400 checks the spare area of the first physical page in order to obtain a second logical page (hereinafter, referred to as "second offset" or Y) in operation S20.

The operation unit 400 obtains the offset of the second physical page X' wherein the first logical page is recorded based on the second offset Y in operation S30. Specifically, the first offset and the second offset are represented by "X" and "Y", respectively. If the difference of the first offset X and second offset Y is represented by "Z", and the total number of physical pages included in the block is N, then the operation unit 400 obtains the offset X' of the second physical page, based on equation 1:

$$X' = (X+Z+N) \bmod N \qquad\qquad (1)$$

That is, the operation unit 400 obtains the offset X' that is the remainder obtained as a result of adding Z, X, and N, then dividing by N (that is, the modulo operation). When the offset X' is obtained through equation 1, the operation unit 400 reads the second physical page in operation S40.

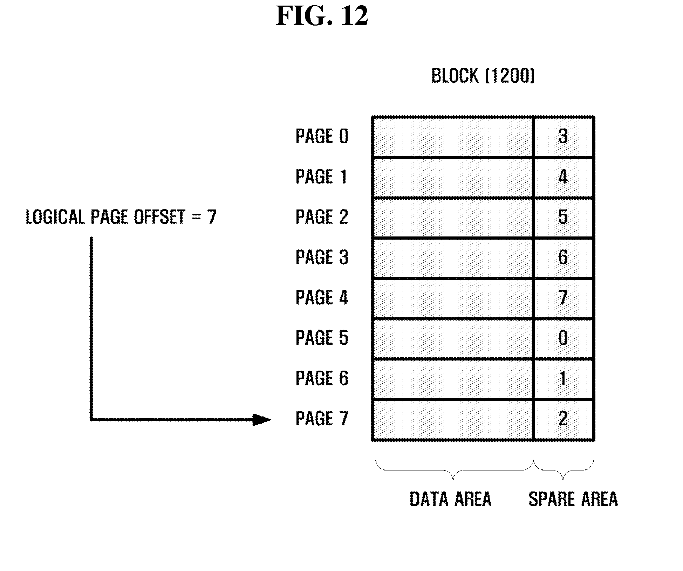

In this aspect, the read operation can be understood by referring to FIG. 12. FIG. 12 depicts a block 1200 according to an aspect of the present invention. The block 1200 shown in FIG. 12 includes eight physical pages (pages 0-7). The logical page offset is recorded in the spare area of each physical page, and the logical page offset of the block 1200 increases in steps and in repeating order. (Because the logical page offset recorded in page 4 is 7, and the logical page offset recorded in page 5 is 0, the logical page offset is referred to as increasing and in repeating order.)

If a request to read the first logical page having the offset 7 is input, the operation accesses the first physical page having the same offset as the first logical page. In detail, because the first logical page offset is 7, the operation unit 400 accesses the first physical page having the offset 7, i.e., page 7. Then, the operation unit 400 checks the spare area of the page 7, and obtains the second logical page offset Y, which is 2.

The operation obtains the offset X' of the second physical page wherein the first logical page is recorded based on the second logical page offset Y recorded in the spare area of the first physical page (page 7) of block 1200. Specifically, the operation unit 400 obtains the offset X' of the second physical page based on equation 1. In the aspect shown in FIG. 12, the offset X' of the second physical page is X' = (7+5+8) mod 8 = 4.

When the offset X' of the second physical page is obtained, the operation unit 400 reads the physical page having the offset 4 in the corresponding block, i.e., the fifth page. In the spare area of the fifth page, i.e., page 4, the number 7 is recorded as the address of the logical page.

In aspects of the present invention, if the logical page included in the block is sorted, it is possible that the logical page offset increases in steps and in repeating order in order to reduce the number of full merge operations, to thereby improve a speed of a write operation in the nonvolatile memory.

In aspects of the present invention, the logical page offset recorded in the physical page is recorded in the spare area of the physical page, to thereby indicate the offset of the physical page wherein the requested logical page is recorded, without referring to mapping information of the physical page and logical page.

In various aspects, the nonvolatile memory may be a flash memory. Also, in various aspects, the increase in the offsets of the logical and/or physical pages may be referred to as ascending, and the repeating thereof may be referred to as circulating. In various aspects, increasing in steps and in repeating order may be referred to as sequential looping or sequentially looped. In various aspects, at least one of refers to any combination of one or more elements. Also, the use of and/or refers to any combination of one or more elements.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A nonvolatile memory managing apparatus comprising:

   a nonvolatile memory (300) that has a first block and a second block having one or more physical pages; and an operation unit (400) that determines a merge operation to perform for the first block and second block according to whether logical page offsets recorded in consecutive physical pages of the first block increase in steps and in repeating order.

2. The apparatus of claim 1, wherein the physical pages comprise:

   a data area in which data is recorded; and
   a spare area in which one of the logical page offsets is recorded.

3. The apparatus of claim 1, wherein, if the logical page offsets do not increase in steps or in repeating order, the operation unit (400) performs a full merge that copies one or more valid logical pages of the first block and the second block to a free block without recorded data.

4. The apparatus of claim 3, wherein the operation unit (400) copies the valid logical pages to the free block so that the offsets of the valid logical pages increase in steps and in repeating order.

5. The apparatus of claim 1, wherein, if the logical page offsets increase in steps and in repeating order, and the number of the valid logical pages in the first block is different from the total number of physical pages included in the first block, the operation unit (400) performs a copy merge that copies one or more valid logical pages of the second block to a free page without recorded data in the first block.

6. The apparatus of claim 5, wherein the operation unit (400) copies the valid logical pages to the free page of the first block so that the offsets of the valid logical pages increase in steps and in repeating order.

7. The apparatus of claim 1, wherein, if the logical page offsets increase in steps and in repeating order, and the number of the valid logical pages in the first block is the same as the total number of physical pages included in the first block, the operation unit (400) performs a switch merge that transfers the first block into a third block.

8. A nonvolatile memory managing apparatus comprising:

   a nonvolatile memory (300) that has at least one block wherein one or more logical page offsets recorded in consecutive physical pages of the block increase in steps and in repeating order;
   an input unit (100) that receives a request to perform a read operation with a first logical page offset; and
   an operation unit (400) that obtains an offset of a second physical page wherein the first logical page offset is recorded based on a second logical page offset obtained using a first physical page after accessing the first physical page having the same offset as a first logical page.

9. The apparatus of claim 8, wherein the physical pages comprise:

   a data area in which data is recorded; and
   a spare area in which one of the logical page offsets is recorded.

10. The apparatus of claim 8, wherein the offset of the second physical page is a remainder obtained when a result of adding a difference of the offset of the first physical page and the offset of the second logical page, the offset of the first physical page, and a total number of physical pages included in the first block is divided by the total number of the physical pages.

11. A nonvolatile-memory-managing method of a nonvolatile memory (300) that has a first block and second block having one or more physical pages, the method comprising:

determining whether logical page offsets recorded in consecutive physical pages of the first block increases in steps and in repeating order; and
deciding a merge operation to perform for the first block and second block according to a result of the determination.

12. The method of claim 11, wherein the physical pages comprise:

a data area in which data is recorded; and
a spare area in which one of the offsets is recorded.

13. The method of claim 11, wherein, if the logical page offsets do not increase in steps or in repeating order, the deciding of the merge operation to perform comprises:

copying one or more valid logical pages of the first block and the second block to a free block without recorded data; and
performing an erase operation of the first block and second block in order to generate a new free block.

14. The method of claim 13, wherein the copying comprises copying of the valid logical pages to the free block so that the offsets of the valid logical pages increase in steps and in repeating order.

15. The method of claim 11, wherein, if the logical page offsets increase in steps and in repeating order, and the number of the valid logical pages in the first block is different from the total number of physical pages included in the first block, the deciding comprises:

copying one or more valid logical pages of the second block to a free page without recorded data in the first block; and
performing an erase operation for the second block in order to generate a new free block.

16. The method of claim 15, wherein the copying comprises copying of the valid logical pages of the second block to the free page so that the offsets of the valid logical pages in the second block increase in steps and in repeating order.

17. The method of claim 11, wherein, if the logical page offsets increase in steps and in repeating order, and the number of the valid logical pages in the first block is the same as the total number of physical pages included in the first block, the deciding comprises transferring of the first block into a third block; and
performing an erase operation for the second block in order to generate a new free block.

18. A nonvolatile-memory-managing method of a nonvolatile memory (300) that has at least one block wherein one or more logical page offsets recorded in consecutive physical pages of the first block increase in steps and in repeating order, the method comprising:

receiving a request to perform a read operation with a first logical page offset;
accessing a first physical page having the same offset as the first logical page offset; and
obtaining an offset of a second physical page wherein the first logical page offset is recorded based on an offset of the second logical page offset obtained from the first physical page.

19. The method of claim 18, wherein the physical pages comprise:

a data area in which data is recorded; and
a spare area in which one of the logical page offsets is recorded.

20. The method of claim 18, wherein the offset of the second physical page is a remainder obtained when a result of adding a difference of the offset of the first physical page and the offset of the second logical page, the offset of the first physical page, and a total number of physical pages included in the first block is divided by the total number of the physical pages.

21. A method of managing a non-volatile memory having a plurality of logic pages and a plurality of physical pages of a block, comprising:

determining whether to perform a switch merge, a copy merge, or a full merge based on at least one of whether offsets of the plurality of the logic pages are sequentially looped and whether a number of valid logical pages of the block is the same as a total number of the physical pages included in the block; and

performing an erase operation on the one or more blocks on which of the switch merge, the copy merge, or the full merge was performed.

22. The method of claim 21, further comprising performing the switch merge if the offsets of the plurality of the logic pages are sequentially looped and if the number of the valid logical pages of the block is the same as the total number of the physical pages included in the block.

23. The method of claim 21, further comprising performing the copy merge if the offsets of the plurality of the logic pages are sequentially looped and if the number of the valid logical pages of the block is not the same as the total number of the physical pages included in the block.

24. The method of claim 21, further comprising performing the full merge if the offsets of the plurality of the logic pages are not sequentially looped and if the number of the valid logical pages of the block is not the same as the total number of the physical pages included in the block.

25. The method of claim 21, wherein the merges are performed if a user requests a write operation or if a number of free blocks is less than a predetermined number.

26. The method of claim 21, wherein the offsets of the plurality of the logic pages that are sequentially looped reduce a number of the full merge that is performed.

27. The method of claim 21, wherein the offsets of the logic pages are recorded in a spare area of the physical pages to thereby indicate the offsets of the physical pages without referring to mapping information of the logic pages and the physical pages.

28. An apparatus to manage a non-volatile memory (300) having a plurality of logic pages and a plurality of physical pages of a block, comprising:

the non-volatile memory (300); and
a controller (400) to determine whether to perform a switch merge, a copy merge, or a full merge based on at least one of whether offsets of the plurality of the logic pages are sequentially looped and whether a number of valid logical pages of the block is the same as a total number of the physical pages included in the block, and to perform an erase operation on the one or more blocks on which of the switch merge, the copy merge, or the full merge was performed.

29. The apparatus of claim 28, wherein the controller (400) performs the switch merge if the offsets of the plurality of the logic pages are sequentially looped and if the number of the valid logical pages of the block is the same as the total number of the physical pages included in the block.

30. The apparatus of claim 28, wherein the controller (400) performs the copy merge if the offsets of the plurality of the logic pages are sequentially looped and if the number of the valid logical pages of the block is not the same as the total number of the physical pages included in the block.

31. The apparatus of claim 28, wherein the controller (400) performs the full merge if the offsets of the plurality of the logic pages are not sequentially looped and if the number of the valid logical pages of the block is not the same as the total number of the physical pages included in the block.

32. The apparatus of claim 28, wherein the merges are performed if a user requests a write operation or if a number of free blocks is less than a predetermined number.

33. The apparatus of claim 28, wherein the offsets of the plurality of the logic pages that are sequentially looped reduce a number of the full merge that is performed.

34. The apparatus of claim 28, wherein the offsets of the logic pages are recorded in a spare area of the physical pages to thereby indicate the offsets of the physical pages without referring to mapping information of the logic pages and

the physical pages.

EP 1 923 792 A1

# FIG. 1A

# (RELATED ART)

10

LSN PSN

| 0 | 15 |
| 1 | 14 |
| 2 | 13 |
| 3 | 12 |
| 4 | 11 |
| 5 | 10 |
| 6 | 9 |
| 7 | 8 |
| 8 | 7 |
| 9 | 6 |
| 10 | 5 |
| 11 | 4 |
| 12 | 3 |
| 13 | 2 |
| 14 | 1 |
| 15 | 0 |

"WRITE TO LSN=9"

SECTOR 0
SECTOR 1

SECTOR 15

BLOCK 0

BLOCK 1

BLOCK 2

BLOCK 3

12

# FIG. 1B

# (RELATED ART)

# FIG. 2

| INPUT UNIT (100) | STORAGE UNIT (200) | NONVOLATILE MEMORY (300) |

OPERATION UNIT (400)

20

# FIG. 3

320

PAGE 0
PAGE 1
PAGE 2
PAGE 3

BLOCK 0    310

PAGE 15

BLOCK 1

BLOCK 2

BLOCK 3

DATA AREA
(330)

SPARE AREA
(340)

# FIG. 4

LOG BLOCK

DATA BLOCK

INVALID

VALID

## FIG. 5

MAP AREA
(510)

LOG BLOCK AREA
(520)

DATA BLOCK AREA
(530)

FREE BLOCK AREA
(540)

NONVOLATILE MEMORY (300)

# FIG. 6

DATA BLOCK (630)

| | 0 |
|---|---|
| | 1 |
| | 2 |
| | 3 |
| | 4 |
| | 5 |
| | 6 |
| | 7 |

↓ ERASE

FREE BLOCK (640)

| | |
|---|---|
| | |
| | |
| | |
| | |
| | |
| | |
| | |

LOG BLOCK (610)

| | 3 |
|---|---|
| | 4 |
| | 5 |
| | 6 |
| | 7 |
| | 0 |
| | 1 |
| | 2 |

↓ TRANSFER

DATA BLOCK (620)

| | 3 |
|---|---|
| | 4 |
| | 5 |
| | 6 |
| | 7 |
| | 0 |
| | 1 |
| | 2 |

| | |
|---|---|
| ▨ | VALID PAGE |
| ▨ | INVALID PAGE |
| ☐ | FREE PAGE |

# FIG. 7

DATA BLOCK (700)          LOG BLOCK (710)

| | |
|---|---|
| | 0 |
| | 1 |
| | 2 |
| | 3 |
| | 4 |
| | 5 |
| | 6 |
| | 7 |

| | |
|---|---|
| | 3 |
| | 4 |
| | 5 |
| | |
| | |
| | |
| | |
| | |

| | |
|---|---|
| ▨ | VALID PAGE |
| ▨ | INVALID PAGE |
| ☐ | FREE PAGE |

# FIG. 8

DATA BLOCK (800)

| | |
|---|---|
| | 0 |
| | 1 |
| | 2 |
| | 3 |
| | 4 |
| | 5 |
| | 6 |
| | 7 |

LOG BLOCK (810)

| | |
|---|---|
| | 3 |
| | 4 |
| | 5 |
| | 5 |
| | |
| | |
| | |
| | |

FREE BLOCK (820)

| | |
|---|---|
| | |
| | |
| | |
| | |
| | |
| | |
| | |
| | |

VALID PAGE

INVALID PAGE

FREE PAGE

# FIG. 9

```
                    ┌─────────┐
                    │  START  │
                    └────┬────┘
                         │
                    ╱────┴────╲  S810
              ╱──────────────────────╲
         YES ╱  IS IT POSSIBLE TO      ╲
        ┌───╱ WRITE TO THE PHYSICAL PAGE?╲
        │   ╲                          ╱
        │    ╲────────┬───────────────╱
        │           NO │
        │        ╱─────┴─────╲  S820
        │   ╱──────────────────────╲   YES
        │  ╱   IS IT POSSIBLE TO     ╲──────────┐
        │  ╲    ALLOCATE FREE PAGE?   ╱          │
        │   ╲                       ╱            │
        │    ╲──────┬──────────────╱             │        S865
        │         NO │                           │
        │      ╱─────┴─────╲  S830        ┌───────┴──────────────────────┐
        │  ╱──────────────────╲          │RECORD DATA IN DATA AREA OF THE │
        │ ╱  IS IT POSSIBLE TO  ╲        │ALLOCATED FREE PAGE AND RECORD  │
        │ ╲   ALLOCATE LOG BLOCK? ╱      │LOGICAL PAGE OFFSET IN SPARE AREA│
        │  ╲                    ╱        └───────────────┬────────────────┘
        │YES╲──────┬──────────╱                          │
        │        NO │                                    │
        │  ┌────────┴───────────────┐  S840              │
        │  │   GENERATE FREE BLOCK   │                    │
        │  │ BY PERFORMING MERGE OP.  │                   │
        │  └────────┬───────────────┘                    │
        │           │                                     │
        │  ┌────────┴───────────────┐  S850              │
        │  │ ALLOCATE FREE BLOCK TO   │                   │
        │  │      LOG BLOCK           │                   │
        │  └────────┬───────────────┘                    │
        │           │                                     │
        └───────────┤                                     │
           ┌────────┴───────────────┐  S860              │
           │       WRITE DATA         │                   │
           └────────┬───────────────┘                    │
                    │◄───────────────────────────────────┘
           ┌────────┴───────────────┐  S870
           │  UPDATE MAPPING INFORMATION │
           └────────┬───────────────┘
                    │
               ┌────┴────┐
               │   END   │
               └─────────┘
```

EP 1 923 792 A1

# FIG. 10

EP 1 923 792 A1

# FIG. 11

START

ACCESS FIRST PHYSICAL PAGE HAVING THE SAME OFFSET
AS THE REQUESTED FIRST LOGICAL PAGE OFFSET X — S10

OBTAIN SECOND LOGICAL PAGE OFFSET Y
BY READING SPARE AREA OF FIRST PHYSICAL PAGE — S20

CALCULATE OFFSET X' OF SECOND PHYSICAL PAGE, IN WHICH FIRST
LOGICAL PAGE IS RECORDED, BASED ON DIFFERENCE Z OF OFFSET OF
THE FIRST PHYSICAL PAGE X AND SECOND LOGICAL PAGE OFFSET Y,
OFFSET OF THE FIRST PHYSICAL PAGE X, AND TOTAL NUMBER N OF
PAGES OF BLOCK — S30

$$X' = (X + Z + N) \bmod N$$

READ SECOND PHYSICAL PAGE
BY REFERRING TO THE CALCULATED OFFSET X' — S40

END

23

EP 1 923 792 A1

# FIG. 12

BLOCK (1200)

LOGICAL PAGE OFFSET = 7

| | | |
|---|---|---|
| PAGE 0 | | 3 |
| PAGE 1 | | 4 |
| PAGE 2 | | 5 |
| PAGE 3 | | 6 |
| PAGE 4 | | 7 |
| PAGE 5 | | 0 |
| PAGE 6 | | 1 |
| PAGE 7 | | 2 |

DATA AREA    SPARE AREA

24

## EUROPEAN SEARCH REPORT

**European Patent Office**

| Application Number |
| --- |
| EP 07 12 0519 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| D,X | US 2002/184436 A1 (KIM BUM-SOO [KR] ET AL KIM BUM-SOO [KR] ET AL) 5 December 2002 (2002-12-05)<br><br>* abstract *<br>* figures 1,3,7,15 *<br>----- | 1,3,5,7, 11,13, 15,17, 21-25, 28-32 | INV.<br>G06F12/02 |
| X | US 2005/141312 A1 (SINCLAIR ALAN W [GB] ET AL) 30 June 2005 (2005-06-30)<br><br>* abstract *<br>* paragraphs [0126], [0127], [0150], [0186], [0586] * | 1-7, 11-17, 21-34 | |
| A | * figure 2 *<br>----- | 8-10, 18-20 | |
| A | EP 1 550 952 A (SAMSUNG ELECTRONICS CO LTD [KR]) 6 July 2005 (2005-07-06)<br><br><br>* abstract *<br>* paragraphs [0028], [0038], [0043] *<br>* figures 2,3 *<br>----- | 1,2,4,6, 8,9,11, 12,14, 16,18, 19,21, 27,28,34 | TECHNICAL FIELDS SEARCHED (IPC)<br><br>G06F |
| A | US 2003/163631 A1 (AASHEIM JERED DONALD [US] ET AL) 28 August 2003 (2003-08-28)<br>* abstract *<br>* paragraph [0072] *<br>----- | 2,9,12, 19,27,34 | |

The present search report has been drawn up for all claims

| Place of search | Date of completion of the search | Examiner |
| --- | --- | --- |
| The Hague | 25 February 2008 | Mandato, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 0519

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2008

| Patent document cited in search report | | Publication date | Patent family member(s) | | Publication date |
|---|---|---|---|---|---|
| US 2002184436 | A1 | 05-12-2002 | CN | 1389790 A | 08-01-2003 |
| | | | JP | 3708047 B2 | 19-10-2005 |
| | | | JP | 2002366423 A | 20-12-2002 |
| | | | KR | 20020092487 A | 12-12-2002 |
| US 2005141312 | A1 | 30-06-2005 | CN | 1914689 A | 14-02-2007 |
| | | | CN | 1973334 A | 30-05-2007 |
| | | | CN | 1922585 A | 28-02-2007 |
| | | | CN | 1922580 A | 28-02-2007 |
| | | | CN | 1922586 A | 28-02-2007 |
| | | | EP | 1704571 A1 | 27-09-2006 |
| | | | JP | 2007517335 T | 28-06-2007 |
| | | | KR | 20060130085 A | 18-12-2006 |
| | | | TW | 272483 B | 01-02-2007 |
| | | | US | 2005144360 A1 | 30-06-2005 |
| | | | US | 2005144365 A1 | 30-06-2005 |
| | | | US | 2005141313 A1 | 30-06-2005 |
| | | | US | 2005166087 A1 | 28-07-2005 |
| | | | WO | 2005066972 A1 | 21-07-2005 |
| EP 1550952 | A | 06-07-2005 | CN | 1637721 A | 13-07-2005 |
| | | | CN | 1900919 A | 24-01-2007 |
| | | | JP | 3977370 B2 | 19-09-2007 |
| | | | JP | 2005196736 A | 21-07-2005 |
| | | | JP | 2007184005 A | 19-07-2007 |
| | | | KR | 20050070672 A | 07-07-2005 |
| | | | US | 2005144368 A1 | 30-06-2005 |
| US 2003163631 | A1 | 28-08-2003 | US | 2006069852 A1 | 30-03-2006 |
| | | | US | 2004168018 A1 | 26-08-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020092487